# EUROPÄISCHE PATENTSCHRIFT

(11) **EP 4 283 421 B1**
(45) Veröffentlichungstag und Bekanntmachung des Hinweises auf die Patenterteilung: **02.07.2025**
(21) Anmeldenummer: 23161645.9
(22) Anmeldetag: 14.03.2023
(51) Int. Cl.: G05B 19/4093

(54) **SYSTEM UND VERFAHREN ZUR ANWENDUNGSBEZOGENEN AUSLEGUNG EINES MAGNETISCHEN SPANNSYSTEMS**
SYSTEM AND METHOD FOR APPLICATION-RELATED DESIGN OF A MAGNETIC TENSIONING SYSTEM
SYSTÈME ET PROCÉDÉ DE CONCEPTION ASSOCIÉE À UNE APPLICATION D'UN SYSTÈME DE SERRAGE MAGNÉTIQUE

(30) Priorität: 24.05.2022 DE 102022113132
(43) Veröffentlichungstag der Anmeldung: 29.11.2023
(73) Patentinhaber: SAV GmbH, 90451 Nürnberg (DE)
(72) Erfinder: Leikauf, Dieter, 90451 Nürnberg (DE)
(74) Vertreter: Ruckh, Rainer Gerhard

(56) Entgegenhaltungen:
- WO-A1-2019/238797
- DE-A1- 102009 015 345

## Beschreibung

Die Erfindung betrifft ein System und ein Verfahren zur anwendungsbezogenen Auslegung eines magnetischen Spannsystems.

Magnetische Spannsysteme werden im Bereich der Werkstückbearbeitung zum Spannen von Werkstücken eingesetzt. Durch das Spannen der Werkstücke mittels des magnetischen Spannsystems sind die Werkstücke in vorgegebenen Positionen im Bereich von Bearbeitungsmaschinen fixiert, so dass eine Bearbeitungsmaschine das Werkstück mit geeigneten Werkzeugen bearbeiten kann.

Die Bearbeitungsmaschine führt generell zerspannende Bearbeitungsprozesse durch, wie z.B. Drehen, Fräsen und Schleifen.

Entsprechend der unterschiedlichen Bearbeitungsprozesse und auch der unterschiedlichen zu bearbeitenden Werkstücke muss das Spannsystem in geeigneter Weise ausgelegt werden. Aufgrund der vielen Variationsmöglichkeiten ist diese Auslegung des Spannsystems komplex und erfordert ein großes Fachwissen, das bei dem Anwender oftmals nicht vorhanden ist. Dabei ist in der Applikation die Auslegung des Spannsystems oft nicht optimal, was dazu führt, dass die die Bearbeitungsprozesse durchführende Bearbeitungsmaschine nicht mit der größtmöglichen Leistung betrieben werden kann und demzufolge einen nicht optimalen Durchsatz erzielt und gegebenenfalls auch nicht optimale Bearbeitungen des Werkstücks liefert.

Die DE 10 2009 015 345 A1 betrifft ein Aufspannsystem. Das Aufspannsystem kann mehrere Elektromagnete enthalten, die sich an einem Trägerelement befinden und dazu ausgebildet sind, ein magnetisches Werkstück an dem Trägerelement zu fixieren. Das Aufspannsystem kann ferner eine Steuerung enthalten, die dazu ausgebildet ist, einen Aktivierungszustand eines oder mehrerer der Elektromagnete basierend auf der Nähe zu einem an dem magnetischen Werkstück durchgeführten Arbeitsvorgang selektiv anzupassen.

Die WO 2019 / 238797 A1 betrifft ein Verfahren zur Fertigung eines Objekts. Hierbei wird ein Objektmodell erstellt, anhand dessen geometrische Eigenschaften des Objekts definiert werden. Anhand der geometrischen Eigenschaften werden Strategien zur Fertigung des Objekts definiert, wobei dann eine Auswahl bestimmter Strategien erfolgt.

Der Erfindung liegt die Aufgabe zugrunde, ein System und ein Verfahren bereitzustellen, mittels dessen eine selbsttätige optimierte Auslegung von Spannsystemen ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein System zur anwendungsbezogenen Auslegung eines magnetischen Spannsystems zum Spannen von Werkstücken mit einer Speichereinheit, in welcher eine Auswahl von Spannsystemen mit diesen kennzeichnenden Parametern abgespeichert ist. In einer Rechnereinheit werden für in der Speichereinheit abgespeicherte Spannsysteme Spannvorgänge eines spezifischen Werkstücks modelliert. Abhängig hiervon werden für diese Spannsysteme Haftkräfte und Verschiebekräfte des Werkstücks berechnet. Für wenigstens einen an dem Werkstück durchführenden Bearbeitungsprozess werden Bearbeitungsparameter bestimmt, wobei anhand der Bearbeitungsparameter die Zerspanbarkeit des spezifischen Werkstücks berechnet wird, wobei in der Rechnereinheit abhängig von den Haftkräften und Verschiebekräften sowie den Bearbeitungsparametern und der berechneten Zerspanbarkeit des spezifischen Werkstücks für die Spannsysteme Leistungsdaten ermittelt werden. Mit einer Anzeigeeinheit, werden die Spannsysteme in einer durch die Leistungsdaten vorgegebenen Reihenfolge angezeigt.

Die Erfindung betrifft weiterhin auch ein entsprechendes Verfahren und zudem ein Computerprogramm und Computerprogrammprodukt zur Durchführung des Verfahrens.

Mit dem erfindungsgemäßen System bzw. Verfahren wird eine selbsttätige, automatisierte und an eine Applikation angepasste und optimierte Auslegung eines Spannsystems ermöglicht.

Das Spannsystem dient generell zum Spannen von Werkstücken, die dann mit Bearbeitungsmaschinen, insbesondere zerspanend, bearbeitet werden. Hierzu sind Werkzeuge zur Bearbeitung der Werkstücke vorgesehen, mittels derer Bearbeitungsprozesse an den Werkstücken durchgeführt werden.

Die Funktionsweise des erfindungsgemäßen Systems ist derart, dass in einer Speichereinheit eine Anzahl von unterschiedlichen Spannsystemen abgespeichert ist.

In einer Rechnereinheit erfolgt eine Auswahl einer oder mehrerer für eine bestehende Applikation geeigneter Spannsysteme, wobei das einem Benutzer an einer Anzeigeeinheit angezeigt wird.

Das System mit der Rechnereinheit, der Speichereinheit und der Anzeigeeinheit bildet ein Rechnersystem, das als lokales oder verteilten Rechnersystem ausgebildet ist. Die Auslegung der Spannsysteme erfolgt mittels der Software, d.h. dem auf der Rechnereinheit installierten Computerprogramm.

Die Auslegung des Spannsystems erfolgt erfindungsgemäß für ein spezifisches Werkstück, dessen Werkstückparameter hierzu vorteilhaft aus der Speichereinheit abgerufen werden.

Für das so bekannte und definierte Werkstück wird in der Rechnereinheit für alle gespeicherten Spannsysteme ein Spannvorgang modelliert.

Die Parameter der Spannsysteme sind in der Speichereinheit gespeichert, so dass jedes Spannsystem vollständig, hinsichtlich Geometrie und Funktion definiert ist.

Hierzu gehören die Magnetbauart, der Magnettyp und die Nennhaftkraft des jeweiligen Spannsystems. Weiterhin sind die Polabstände, Polspalten, Polteilungen, insbesondere auch deren Messinganteile das Spannsystem bestimmende Größen. Auch die Feldhöhenverteilungen kennzeichnen das jeweilige Spannsystem.

All diese Kenngrößen sind für die jeweiligen Spannsysteme in der Speichereinheit hinterlegt.

Generell kann in der Speichereinheit eine Klassifikation der Spannsysteme dahingehend vorgenommen sein, dass diese in die Kategorien Rundmagneten und rechteckige Magneten unterteilt sind.

Diese Aufteilung kann in der Software der Rechnereinheit dahingehend weitergeführt sein, dass für Spannsysteme in Form von Rundmagneten einerseits und für Spannsysteme in Form von rechteckigen Magneten separate Programme zur Auslegung der Spannsysteme vorhanden sind.

Die Werkstückparameter wiederum kennzeichnen wiederum das Werkstück hinreichend vollständig, um den Spannvorgang mit dem jeweiligen Spannsystem genau modellieren zu können.

Vorteilhaft umfassen die Werkstückparameter Geometriedaten, Materialdaten, und/oder die Lage des spezifischen Werkstücks auf dem Spannsystem.

Diese sind insbesondere durch die Größe und Geometrie des spezifischen Werkstücks festgelegt. Weiterhin ist auch die Positionierung des spezifischen Werkstücks auf dem Spannsystem festgelegt, insbesondere auch dahingehend, ob das Werkstück zentrisch oder exzentrisch auf dem Spannsystem gespannt ist.

Weiterhin kennzeichnen weitere Werkstückparameter die Materialbeschaffenheit des Werkstücks. Hierzu gehören unmagnetische Legierungsanteile des Werkstückmaterials oder auch Wärmebehandlungen der Werkstücke.

Schließlich sind Werkstückparameter vorgesehen, die Wechselwirkungen mit dem jeweiligen Spannsystem darstellen. Hierzu gehören Luftspalte zwischen dem Werkstück und den Magneten des jeweiligen Spannsystems, die durch spezifische Werkstückgeometrien oder auch Oberflächenrauigkeit bedingt sein können. Ebenso können vom Spannsystem abhängige Werkstückparameter Flussdichten-Konzentrationseffekte bei einer Teilbelegung des Spannsystems durch das Werkstück im Vergleich zu einer Vollbelegung sein.

Für das mit den Werkstückparametern spezifizierte Werkstück werden dann für die in der Speichereinheit gespeicherte Spannsysteme die Haftkräfte und Verschiebekräfte berechnet. Die Haftkraft ist die Kraft, die erforderlich ist, um das Werkstück vom Spannsystem abzuheben. Die Verschiebekraft ist die Kraft, die erforderlich ist, um das Werkstück auf dem Spannsystem zu verschieben. Da alle die Spannsysteme kennzeichnenden Parameter und alle das Werkstück kennzeichnenden Werkstückparameter in der Rechnereinheit bekannt sind, kann die Berechnung der Haft- und Verschiebekräfte hochgenau durchgeführt werden.

Zusätzlich kann in der Rechnereinheit eine Berechnung auf Planzug durchgeführt werden. Bei bekannter Werkstückunebenheit kann auf Basis von frei gewordenen Eigenspannungen die Fähigkeit der Magnete des Spannsystems, das Werkstück plan auf diese Magnete zu ziehen, berechnet werden. Die Werkstückoberflächen können insbesondere konvex oder konkav gekrümmt sein. Bei nicht vollständig plangezogener konvexer Auflage, kann der verbleibende Hebelarm bei der Bearbeitung des Werkstücks berechnet werden.

Erfindungsgemäß erfolgt die Auslegung des Spannsystems nicht nur in Abhängigkeit des spezifischen Werkstücks und der berechneten Haft- und Verschiebekräfte, sondern auch in Abhängigkeit von Bearbeitungsparametern, die wenigstens einen an dem Werkstück durchzuführenden Bearbeitungsprozess kennzeichnen. Die Bearbeitungsparameter beschreiben dabei vorteilhaft auch die entsprechenden Bearbeitungsmaschinen bzw. die Werkzeuge, mit denen das spezifische Werkstück bearbeitet wird. Anhand der Bearbeitungsparameter erfolgt in der Rechnereinheit die Zerspanbarkeit des spezifischen Werkstücks.

Vorteilhaft sind in der Speichereinheit Bearbeitungsparameter für unterschiedliche Bearbeitungsprozesse abgespeichert. In der Rechnereinheit werden für das spezifische Werkstück, für welches der Spannvorgang modelliert wird, spezifische Bearbeitungsparameter ausgewählt.

Die Bearbeitungsprozesse können vorteilhaft für Spannsysteme mit Rundmagneten und Spannsysteme mit rechteckigen Magneten unterschiedlich sein. Vorteilhaft werden an Werkstücken, die an Spannsystemen mit Rundmagneten gespannt sind, Bearbeitungsprozesse in Form von Drehen, Haftdrehen, Rundschleifen, Gleitschuh-Schleifen, Erodieren, Bohren oder Fräsen durchgeführt. Weiter vorteilhaft werden an Werkstücken, die an Spannsystemen mit rechteckigen Magneten gespannt sind, Bearbeitungsprozesse in Form von Schleifen, Fräsen (hart und weich) oder Erodieren durchgeführt.

Bei Spannsystemen mit Rundmagneten sind insbesondere für die Bearbeitungsprozesse Drehen, als Bearbeitungsparameter die Position und der Winkel des Werkzeugs relativ vom Werkstück und damit die Position des Kraftangriffs am Werkstück relevant.

Weiterhin relevante Bearbeitungsparameter sind Zerspannungsparameter, wie Schnitttiefen und Schnittgeschwindigkeiten. Weitere relevante Bearbeitungsparameter sind die Spindeln von Bearbeitungsmaschinen kennzeichnende Parameter wie Spindellage, Richtung der Vorschub- bzw. Passivkraft im Bezug zur Aufspannebene und dergleichen. Weitere Bearbeitungsparameter sind eingesetzte Schneidstoffe, Werkzeugverschleiß und die Art der Bearbeitung (Rund- oder Plandrehen, durchgehender oder unterbrochener Schnitt). Ein weiterer Bearbeitungsparameter ist der Maschinenwirkungsgrad der Bearbeitungsmaschine.

Anhand dieser Bearbeitungsparameter erfolgt in der Rechnereinheit die Berechnung der Zerspanbarkeit des spezifischen Werkstücks. Ergebnis ist ein Sicherheitsfaktor für die spezifische Anwendung.

Bei Bearbeitungsprozessen in Form von Bohren, gelten im Wesentlichen dieselben Berechnungsgrundlagen wie beim Drehen. Bei Bearbeitungsprozessen in Form von Rundschleifen, gelten auch im Wesentlichen dieselben Berechnungsgrundlagen wie beim Drehen, jedoch mit der Einschränkung, dass Kräfte und Leistungen aufgrund der unbestimmten Schneiden der Werkzeuge, sowie unterschiedlicher Werkstoff- und Kühlschmiereinflüsse nur innerhalb größerer Toleranzen berechnet werden können.

Als Ergebnisse der Berechnungen in der Rechnereinheit werden Leistungsdaten für die einzelnen abgespeicherten Spannsysteme erhalten, anhand derer aus den abgespeicherten Spannsystemen ein oder mehrere für die Werkstückbearbeitung geeignete Spannsysteme erhalten werden. Dadurch wird eine Auslegung von Spannsystemen erhalten, die auf die Bearbeitung des spezifischen Werkstücks hin optimiert ist.

Vorteilhaft werden hierzu an der Anzeigeeinheit die geeigneten Spannsysteme in einer durch ihre Leistungsdaten vorgegebenen Reihenfolge angezeigt, so dass ein Benutzer sofort die am besten geeigneten Spannsysteme erkennen kann und für die jeweilige Applikation übernehmen kann.

Bei den Leistungsdaten handelt es sich insbesondere um Zerspankraftkomponenten, die Zerspanungs- und Maschinenleistung der Bearbeitungsmaschine und um das Zeitspanvolumen, d.h. das Volumen an Spänen, das mit der Bearbeitungsmaschine bei Einsatz des ausgewählten Spannsystems erzielt werden kann.

Durch eine Auswahl des Spannsystems hinsichtlich des Kriteriums Zeitspanvolumen kann die Wirtschaftlichkeit der Bearbeitungsmaschine gezielt erhöht werden.

Bei Spannsystemen mit rechteckigen Magneten erfolgt die Auslesung der Spannsysteme in entsprechender Weise.

Bei Bearbeitungsprozessen in Form von Stirnfräsen erfolgt die Berechnung der Zerspanbarkeit des spezifischen Werkstücks in Abhängigkeit der Zerspannungsparameter Schnitttiefe, Vorschub- und Schnittgeschwindigkeit. Zudem werden als Bearbeitungsparameter der Winkel am Werkzeug, die Werkstücklage, der Werkzeugverschluss, die Auflage des Werkstücks auf dem Spannsystem mit oder ohne Planzug und der Maschinenwirkungsgrad der Bearbeitungsmaschine berücksichtigt. Zudem wird berücksichtigt, ob das Werkstück direkt oder über eine Auflagepolplatte auf dem Spannsystem aufliegt.

Als Ergebnisse der Berechnungen werden wieder Leistungsdaten erhalten, anhand derer die Auslegung des Spannsystems dadurch erfolgt, dass Spannsysteme entsprechend einer durch die Leistungsdaten vorgegebenen Reihenfolge an der Anzeigeeinheit angezeigt werden.

Die Leistungsdaten sind Schnittkräfte und Drehmomente, die Zerspannungsleistung und Maschinenleistung der Bearbeitungsmaschinen, die Anzahl von benötigten Polschuhen zur Bearbeitung des Werkstücks und das Zeitpanvolumen.

Bei Bearbeitungsprozessen in Form von Umformungsfräsen gelten im Wesentlichen dieselben Berechnungsgrundlagen, wie beim Stirnfräsen. Bei Bearbeitungsprozessen in Form von Planschleifen gelten auch im Wesentlichen dieselben Berechnungsgrundlagen wie beim Stirnfräsen, jedoch mit der Einschränkung, dass Kräfte und Leistungen aufgrund der unbestimmten Schneiden und aufgrund unterschiedlicher Werkstoff- und Kühlschmiereinflüssen nur innerhalb größerer Toleranzen berechnet werden können.

Für alle Typen von Spannsystemen können als weitere Leistungsdaten Sicherheitskenngrößen berechnet werden, die die Sicherheit der durchzuführenden Bearbeitungsprozesse kennzeichnen und klassifizieren. Bei Spannsystemen mit Rundmagneten beschreiben die Sicherheitskenngrößen die Sicherheit des Werkstücks gegen einen Abriss vom Spannsystem. Die Bearbeitungsprozesse sind daher so auszulegen, dass die einwirkenden Kräfte nicht zu einem Abriss des Werkstücks von Spannsystemen führen.

Bei Spannsystemen mit Rundmagneten beschreiben die Sicherheitskenngrößen auch die Sicherheit gegen eine beginnende Verformung von Werkstücken, die insbesondere in Form von dünnen Ringen ausgebildet sind. Die Bearbeitungsprozesse sind daher so auszulegen, dass derartige Verformungen nicht auftreten.

Bei Spannsystemen mit rechteckigen Magneten werden als Sicherheitskenngrö-ßen die Sicherheit des Werkstücks, insbesondere gegen Abriss von Spannsystem bei Direktauflage auf dem Spannsystem oder bei Verwendung von Auflagepolplatten, berechnet. Zudem wird die Anzahl von Polschuhen berechnet, die zur sicheren Beurteilung des Werkstücks erforderlich sind. Als Ergebnis der Berechnungen können geeignete Auslegungen von Spannsystemen mit Direktauflage oder mit Verwendung von Auflagepolplatten sowie mit geeigneter Anzahl von Polschuhen angegeben werden.

Schließlich können als Auslegungen von Spannsystemen für die Werkstückbearbeitung geeignete Bearbeitungsprozesse bestimmt und an der Anzeigeeinheit ausgegeben werden. Insbesondere kann dabei auch eine Optimierung der Schnitttiefe und des Vorschubs bei der Werkstückbearbeitung vorgenommen werden, wodurch Bearbeitungsprozesse optimiert werden können.

Die Erfindung wird im Folgenden anhand der Zeichnungen erläutert. Es zeigen:
- Figur 1:: Schematische Darstellung eines magnetischen Spannsystems mit rechteckigen Magneten.
- Figur 2:: Schematische Darstellung eines magnetischen Spannsystems mit Rundmagneten.
- Figur 3:: Teil eines Magneten des Spannsystems gemäß Figur 1 und 2 mit einem darauf gespannten Werkstück a) für ein Werkstück mit großer Werkstückhöhe. b) für ein Werkstück mit kleiner Werkstückhöhe.
- Figur 4:: Schematische Darstellung des erfindungsgemäßen Systems zur Auslegung von Spannsystemen.

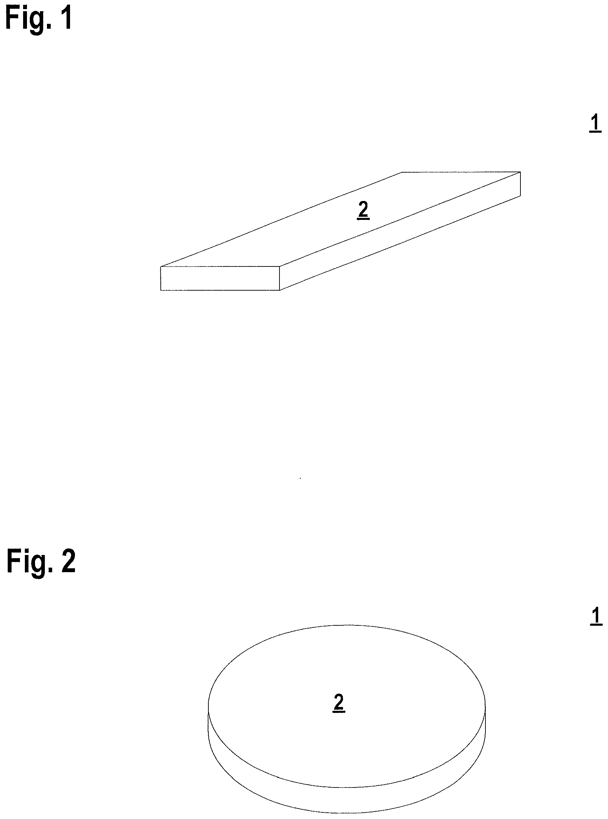

Figur 1 zeigt stark schematisiert ein magnetisches Spannsystem 1 mit rechteckigen Magneten, die in einer Spannplatte 2 mit rechteckigem Querschnitt integriert sind.

Figur 2 zeigt ebenfalls stark schematisiert ein Spannsystem 1 mit Rundmagneten, die in einer kreisscheibenförmigen Spannplatte 2 integriert sind.

Beide Spannsysteme 1 weisen typischerweise eine Anordnung von Elektropermanentmagneten 3 auf, die mittels elektrischen Signalen, insbesondere Impulssignalen, ein- und ausgeschaltet werden können.

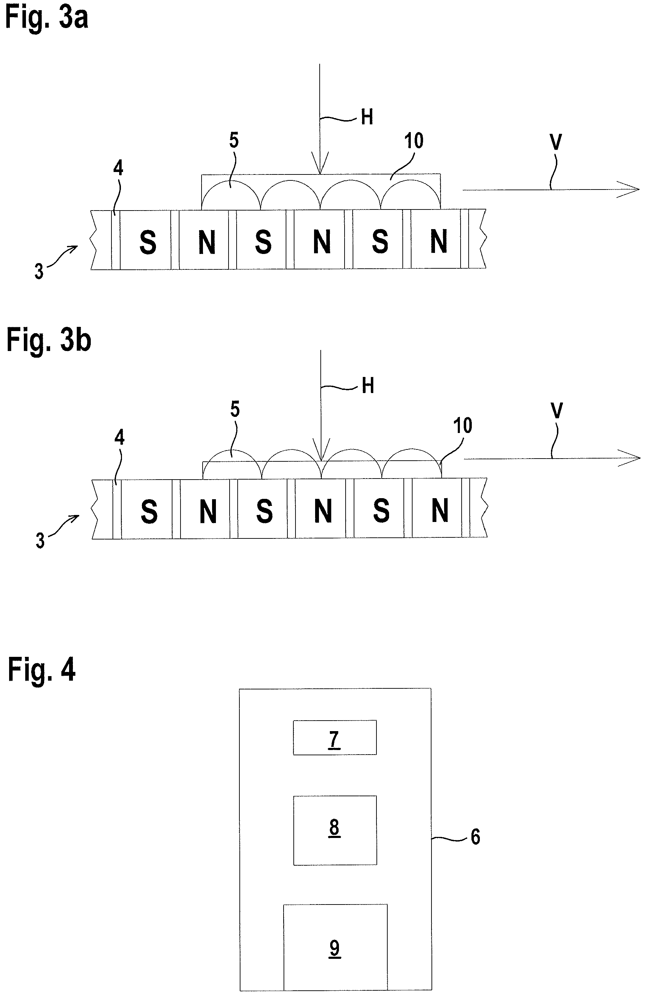

Bei eingeschalteten Elektropermanentmagneten 3 wird ein Werkstück 10 auf der Spannplatte 2 gespannt, in dem das Werkstück 10 magnetisiert wird, wie die Figuren 3a und 3b schematisch zeigen. Bei ausgeschaltetem Elektropermanentmagnet 3 wird die Magnetisierung des Werkstücks 10 wieder aufgehoben. Das Werkstück 10 besteht generell aus einem magnetisierbaren, insbesondere einem metallischen Werkstoff.

Die Figuren 3a und 3b zeigen einen Ausschnitt eine Elektropermanentmagneten 3, dessen Pole mit "N" und "S" bezeichnet sind, die Pole sind durch Polspalte 4 getrennt.

Bei der Ausführungsform der Figuren 3a weist das Werkstück 10 eine große Höhe auf, so dass die mit dem Elektropermanentmagnet 3 generierten Kraftlinien 5 vollständig im Werkstück 10 verlaufen. Dementsprechend wird mit dem Elektropermanentmagnet 3 eine große Haftkraft H und eine große Verschiebekraft V generiert. Die Haftkraft H ist senkrecht zur Oberfläche gerichtet. Übersteigen äußere Kräfte bei der Bearbeitung des Werkstücks 10 die Haftkraft H, erfolgt ein Abriss des Werkstücks 10 vom Spannsystems 1. Die Verschiebekraft V ist parallel zur Oberfläche des Spannsystems 1 gerichtet und gibt die Kraft an, die erforderlich ist, um das Werkstück 10 auf deren Spannsystem 1 zuzuschieben.

Bei der Ausführungsform der Figur 3b weist das Werkstück 10 eine geringere Höhe auf, so dass die Kraftlinien 5 des Elektropermanentmagnet 3 nicht vollständig im Werkstück 10 verlaufen. Dementsprechend sind die Haftkraft H und Verschiebekraft V geringer als ein Ausführungsbeispiel gemäß Figur 3a.

Das Beispiel gemäß den Figuren 3a, 3b veranschaulicht, dass die Haft- und Verschiebekraft V generell von der Ausbildung des Werkstücks 10 abhängig ist.

Die mit den Spannsystemen 1 gespannten Werkstücke 10 werden generell mittels einer Bearbeitungsmaschine (nicht dargestellt) bearbeitet, wobei hierzu geeignete Werkzeuge vorgesehen sind. Generell werden mit der Bearbeitungsmaschine zerspannende Bearbeitungsprozesse ausgeführt.

Figur 4 zeigt schematisch das erfindungsgemäße System zur Auslegung von magnetischen Spannsystemen 1, wie beispielhaft in den Figuren 1 bis 3 dargestellt.

Das System, ist in Form eines Rechnersystems 6 ausgebildet und umfasst eine Speichereinheit 7, eine Rechnereinheit 8 wie z.B. ein Prozessorsystem, und eine Anzeigeeinheit 9, wie z.B. ein Display. Das Rechnersystem 6 kann von einem isolierten Rechner, wie einem PC oder von einem verteilten System gebildet sein. Auf dem Rechnersystem 6 ist eine Software, d.h. ein Computerprogramm implementiert, mittels dessen die Auslegung von Spannsystemen 1 durchgeführt wird.

In der Speichereinheit 7 ist eine Auswahl von Spannsystemen 1 mit diesen kennzeichnenden Parametern abgespeichert.

Als Eingangsgröße kann ein spezifisches Werkstück 10 in das Rechnersystem 6 eingegeben werden, das mit einem Spannsystem 1 gespannt und dann zerspanend bearbeitet werden soll.

Für dieses spezifische Werkstücke 10 erfolgt vorzugsweise für alle abgespeicherten Spannsysteme 1 eine Modellierung des Spannvorgans.

Vorteilhaft sind in der Speichereinheit 7 Werkstücke 10 kennzeichnende Werkstückparameter abgespeichert, wobei die Modellierung des Spannvorgangs abhängig von den Werkstückparametern eines spezifischen Werkstücks 10 erfolgt.

Dabei umfassen die Werkstückparameter Geometriedaten, Materialdaten, und/oder die Lage des spezifischen Werkstücks 10 auf dem Spannsystem 1.

Abhängig hiervon werden für die einzelnen Spannsysteme 1 die Haltekräfte und Verschiebungskräfte des spezifischen Werkstücks 10 berechnet.

Weiterhin sind in der Speichereinheit 7 Bearbeitungsparameter für unterschiedliche Bearbeitungsprozesse abgespeichert. In der Rechnereinheit 8 werden für das spezifische Werkstück 10, für welches der Spannvorgang modelliert wird, spezifische Bearbeitungsparameter ausgewählt.

Anhand der Bearbeitungsparameter wird die Zerspanbarkeit der spezifischen Werkstücke 10 berechnet.

Aus diesen Größen werden in der Rechnereinheit 8 Leistungsdaten für die Spannsysteme 1 berechnet, anhand derer in einer Reihenfolge, die am besten für die Applikationen geeigneten Spannsysteme 1 ermittelt, was an der Anzeigeeinheit 9 angezeigt wird. Dadurch kann ein Benutzer das für die Applikation am besten geeignete Spannsystem 1 auswählen.

Generell ist mit dem Begriff Reihenfolge eine Bewertung der Spannsysteme 1 hinsichtlich ihrer Eignung gemeint.

Die Reihenfolge kann insbesondere ein Kennlinienfeld sein, in dem unterschiedliche Leistungsdaten separat aufgeführt werden.

Typischerweise werden als Leistungsdaten die Zerspannungsleistung und/oder Maschinenleistung und/oder das Zeitspanvolumen einer das spezifische Werkstück 10 bearbeitende Bearbeitungsmaschine bestimmt.

Die Auslegung kann für Spannsysteme 1 mit Rundmagneten, bzw. rechteckigen Magneten im Rechnersystem 6 separat, insbesondere mit einem separaten Computerprogramm vorweggenommen sein. Dementsprechend können für diese unterschiedlichen Spannsysteme 1 auch unterschiedliche Leistungsdaten ermittelt werden.

Vorteilhaft werden als Leistungsdaten Sicherheitskenngrößen für Bearbeitungsprozesse des spezifischen Werkstücks 10 bestimmt.

Diese definieren Sicherheitskriterien für das Spannsystem 1 bei der Bearbeitung der Werkstücke 10 mit einer Bearbeitungsmaschine.

Gerenell können mit den erfindungsgemäßen Rechnersystemen 6 auch für die Bearbeitung der mit dem Spannsystem 1 gespannten Werkstück 10 optimale Bearbeitungsprozesse ausgewählt oder auch Bearbeitungsprozesse optimiert werden.

### Bezugszeichenliste

- (1): Spannsystem
- (2): Spannplatte
- (3): Elektropermanentmagnet
- (4): Polspalte
- (5): Kraftlinie
- (6): Rechnersystem
- (7): Speichereinheit
- (8): Rechnereinheit
- (9): Anzeigeeinheit
- (10): Werkstück

- (H): Haftkraft
- (V): Verschiebekraft

## Patentansprüche

1. System zur anwendungsbezogenen Auslegung eines magnetischen Spannsystems (1) zum Spannen von Werkstücken (10)
- mit einer Speichereinheit (7), in welcher eine Auswahl von Spannsystemen (1) mit diesen kennzeichnenden Parametern abgespeichert ist.
- mit einer Rechnereinheit (8), in welcher für in der Speichereinheit (7) abgespeicherte Spannsysteme (1) ein Spannvorgang eines spezifischen Werkstücks (10) modelliert wird und abhängig hiervon für diese Spannsysteme (1) Haftkräfte und Verschiebekräfte des Werkstücks (10) berechnet werden, und in welcher für wenigstens einen an dem Werkstück (10) durchführenden Bearbeitungsprozess Bearbeitungsparameter bestimmt werden, wobei anhand der Bearbeitungsparameter die Zerspanbarkeit des spezifischen Werkstücks berechnet wird, wobei in der Rechnereinheit (8) abhängig von den Haftkräften und Verschiebekräften sowie den Bearbeitungsparametern und der berechneten Zerspanbarkeit des spezifischen Werkstücks für die Spannsysteme (1) Leistungsdaten ermittelt werden.
- und mit einer Anzeigeeinheit (9), an welcher die Spannsysteme (1) in einer durch die Leistungsdaten vorgegebenen Reihenfolge angezeigt werden.

2. System nach Anspruch 1, **dadurch gekennzeichnet, dass** in der Speichereinheit (7) Spannsysteme (1) mit Rundmagneten und/oder rechteckigen Magneten abgespeichert sind.

3. System nach Anspruch 2, **dadurch gekennzeichnet, dass** für Speichersysteme mit Rundmagneten und für Speichersysteme mit rechteckigen Magneten separate Auslegungen durchgeführt werden.

4. System nach einem der Ansprüche 1 bis 3, **dadurch gekennzeichnet, dass** mit diesem geeignete Bearbeitungsprozesse für Spannsysteme (1) ausgewählt werden, und/oder dass in der Rechnereinheit (8) eine Optimierung von Bearbeitungsprozessen erfolgt.

5. System nach Anspruch 4, **dadurch gekennzeichnet, dass** eine Optimierung des Vorschubs oder einer Schnitttiefe erfolgt.

6. System nach einem der Ansprüche 1 bis 5, **dadurch gekennzeichnet, dass** in der Speichereinheit (7) Werkstücke (10) kennzeichnende Werkstückparameter abgespeichert sind, wobei die Modellierung des Spannvorgangs abhängig von den Werkstückparametern eines spezifischen Werkstücks (10) erfolgt.

7. System nach Anspruch 6, **dadurch gekennzeichnet, dass** die Werkstückparameter Geometriedaten, Materialdaten, und/oder die Lage des spezifischen Werkstücks (10) auf dem Spannsystem (1) umfassen.

8. System nach einem der Ansprüche 1 bis 7, **dadurch gekennzeichnet, dass** in der Speichereinheit (7) Bearbeitungsparameter für unterschiedliche Bearbeitungsprozesse abgespeichert sind, und dass in der Rechnereinheit (8) für das spezifische Werkstück (10), für welches der Spannvorgang modelliert wird und spezifische Bearbeitungsparameter ausgewählt werden.

9. System nach einem der Ansprüche 1 bis 8, **dadurch gekennzeichnet, dass** als Leistungsdaten die Zerspannungsleistung und/oder Maschinenleitung und/oder das Zeitspanvolumen einer das spezifische Werkstück (10) bearbeitende Bearbeitungsmaschine bestimmt werden, und/oder dass als Leistungsdaten Sicherheitskenngrößen für Bearbeitungsprozesse des spezifischen Werkstücks (10) bestimmt werden.

10. System nach Anspruch 9, **dadurch gekennzeichnet, dass** die Sicherheitskenngrößen die Sicherheit gegen einem Werkstückabriss vom Spannsystem (1) und/oder die Sicherheit gegen beginnende Verformung des spezifischen Werkstücks (10) bei Durchführung eines Bearbeitungsprozesses kennzeichnen.

11. System nach einem der Ansprüche 1 bis 10, **dadurch gekennzeichnet,**
**dass** in der Rechnereinheit (8) als Ausgabegrößen Auslegungen von Spannsystemen generiert und mit der Anzeigeeinheit (9) angezeigt werden.

12. System nach Anspruch 11, **dadurch gekennzeichnet, dass** die Auslegung die Verwendung und Dimensionierung von Polschuhen und/oder Auflagepolplatten betrifft.

13. Verfahren zur anwendungsbezogenen Auslegung eines magnetischen Spannsystems (1) zum Spannen eines Werkstücks (10), durchgeführt durch das System nach Anspruch 1, umfassend folgende Verfahrensschnitte.
- Abspeichern einer Anzahl von Spannsystemen (1) mit diesen kennzeichnenden Parametern in einer Speichereinheit (7).
- Modellierung eines Spannvorgangs eines spezifischen Werkstücks (10) in einer Rechnereinheit (8) für in der Spanneinheit abgespeicherte Spannsysteme (1).
- Berechnung von Haftkräften und Verschiebekräften des Werkstücks (10) in der Rechnereinheit (8) abhängig von der Modellierung des Spannvorgangs.
- Bestimmung von Bearbeitungsparametern wenigstens eines an dem Werkstück (10) durchzuführenden Bearbeitungsprozesses mittels der Rechnereinheit (8).
- Berechnen der Zerspanbarkeit des spezifischen Werkstücks anhand der Bearbeitungsparameter.
- Ermittlung von Leistungsdaten für die Spannsysteme (1) abhängig von den Haftkräften und Verschiebekräften sowie den Bearbeitungsparametern und der berechneten Zerspanbarkeit des spezifischen Werkstücks mittels der Rechnereinheit (8).
- Anzeigen der Spannsysteme (1) in einer durch die Leistungsdaten vorgegebenen Reihenfolge an einer Anzeigeeinheit (9).

14. Computerprogramm mit Anweisung, die bei Ausführung durch einen Computer den Computer veranlassen, ein Verfahren nach Anspruch 13 auszuführen.

15. Computerprogrammprodukt mit Programmcode-Mitteln, die auf einem computerlesbaren Datenträger gespeichert sind und derart eingerichtet sind, dass der Computer nach Laden des Computerprogramms alle Verfahrensschritte des Anspruchs 13 ausführt, wenn das Computerprogramm auf dem Computer ausgeführt wird.

## Claims

1. System for the application-related design of a magnetic tensioning system (1) for tensioning workpieces (10)
- with a memory unit (7) in which a selection of tensioning systems (1) with these characterising parameters is stored.
- with a computer unit (8) in which a tensioning process of a specific workpiece (10) is modelled for tensioning systems (1) stored in the memory unit (7) and in relation thereof holding forces and displacement forces of the workpiece (10) are calculated for these tensioning systems (1), and in which machining parameters are determined for at least one machining process to be carried out on the workpiece (10), wherein the machinability of the specific workpiece is calculated on the basis of the machining parameters, wherein performance data for the tensioning systems (1) are determined in the computer unit (8) as a function of the holding forces and displacement forces and the machining parameters and the calculated machinability of the specific workpiece.
- and with a display unit (9) on which the tensioning systems (1) are displayed in a sequence determined by the performance data.

2. System according to claim 1, **characterised in that** tensioning systems (1) with round magnets and/or rectangular magnets are stored in the storage unit (7).

3. System according to claim 2, **characterised in that** separate designs are carried out for storage systems with round magnets and for storage systems with rectangular magnets.

4. System according to one of claims 1 to 3, **characterised in that** it is used to select suitable machining processes for tensioning systems (1), and/or **in that** machining processes are optimised in the computer unit (8).

5. System according to claim 4, **characterised in that** the feed rate or a cutting depth is optimised.

6. System according to one of claims 1 to 5, **characterised in that** workpiece parameters characterising workpieces (10) are stored in the memory unit (7), the modelling of the tensioning process being carried out as a function of the workpiece parameters of a specific workpiece (10).

7. System according to claim 6, **characterised in that** the workpiece parameters comprise geometry data, material data and/or the position of the specific workpiece (10) on the tensioning system (1).

8. System according to one of claims 1 to 7, **characterised in that** machining parameters for different machining processes are stored in the memory unit (7), and **in that** specific machining parameters are selected in the computer unit (8) for the specific workpiece (10) for which the tensioning process is modelled.

9. System according to one of claims 1 to 8, **characterised in that** the cutting power and/or machine conduction and/or the metal removal rate of a processing machine processing the specific workpiece (10) are determined as performance data, and/or **in that** safety parameters for machining processes of the specific workpiece (10) are determined as performance data.

10. System according to claim 9, **characterised in that** the safety parameters characterise the safety against workpiece breakage from the tensioning system (1) and/or the safety against incipient deformation of the specific workpiece (10) when carrying out a machining process.

11. System according to one of claims 1 to 10, **characterised in that** in the computer unit (8), layouts of tensioning systems are generated as output variables and displayed with the display unit (9).

12. System according to claim 11, **characterised in that** the design relates to the use and dimensioning of pole shoes and/or support pole plates.

13. Method for the application-related design of a magnetic tensioning system (1) for tensioning a workpiece (10), carried out by the system according to claim 1, comprising the following steps :
- Storing a number of tensioning systems (1) with these characterising parameters in a memory unit (7).
- Modelling a tensioning process of a specific workpiece (10) in a computer unit (8) for tensioning systems (1) stored in the tensioning unit.
- Calculating adhesive forces and displacement forces of the workpiece (10) in the computer unit (8) depending on the modelling of the tensioning process.
- Determining machining parameters of at least one machining process to be carried out on the workpiece (10) by means of the computer unit (8).
- Calculating the machinability of the specific workpiece based on the machining parameters.
- Determining the performance data for the tensioning systems (1) depending on the holding forces and displacement forces as well as the machining parameters and the calculated machinability of the specific workpiece by means of the computer unit (8).
- Displaying the tensioning systems (1) in a sequence specified by the performance data on a display unit (9).

14. Computer program comprising instructions which, when executed by a computer, cause the computer to perform a method according to claim 13.

15. Computer program product comprising program encoding means stored on a computer readable medium and arranged such that when the computer program is executed on the computer, the computer performs all the steps of claim 13 after loading the computer program.

## Revendications

1. Système de conception d'un système de serrage magnétique (1) pour le serrage de pièces (10) en fonction de l'application
- comprenant une unité de mémoire (7) dans laquelle est stockée une sélection de systèmes de serrage (1) avec ces paramètres de caractérisation.
- comprenant une unité informatique (8) dans laquelle un processus de serrage d'une pièce spécifique (10) est modélisé pour des systèmes de serrage (1) stockés dans l'unité de mémoire (7) et en fonction desquels des forces de maintien et des forces de déplacement de la pièce (10) sont calculées pour ces systèmes de serrage (1), et dans laquelle des paramètres d'usinage sont déterminés pour au moins un processus d'usinage à effectuer sur la pièce (10), dans lequel l'usinabilité de la pièce spécifique est calculée sur la base des paramètres d'usinage, dans lequel les données de performance des systèmes de serrage (1) sont déterminées dans l'unité informatique (8) en fonction des forces de maintien et des forces de déplacement, des paramètres d'usinage et de l'usinabilité calculée de la pièce spécifique.
- et une unité d'affichage (9) sur laquelle les systèmes de serrage (1) sont affichés dans un ordre déterminé par les données de performance.

2. Système selon la revendication 1, **caractérisé par le fait que** les systèmes de serrage (1) comprenant des aimants ronds et/ou rectangulaires sont stockés dans l'unité de stockage (7).

3. Système selon la revendication 2, **caractérisé par le fait que** des conceptions distinctes sont réalisées pour les systèmes de stockage à aimants ronds et pour les systèmes de stockage à aimants rectangulaires.

4. Système selon l'une des revendications 1 à 3, **caractérisé par le fait qu'**il est utilisé pour sélectionner les processus d'usinage convenant aux systèmes de serrage (1), et/ou **par le fait que** les processus d'usinage sont optimisés dans l'unité informatique (8).

5. Système selon la revendication 4, **caractérisé par** l'optimisation de la vitesse d'avance ou de la profondeur de coupe.

6. Système selon l'une des revendications 1 à 5, **caractérisé par le fait que** les paramètres des pièces à usiner (10) sont stockés dans l'unité de mémoire (7), la modélisation du processus de serrage étant effectuée en fonction des paramètres d'une pièce à usiner spécifique (10).

7. Système selon la revendication 6, **caractérisé par le fait que** les paramètres de la pièce comprennent des données géométriques, des données sur le matériau et/ou la position de la pièce spécifique (10) sur le système de serrage (1).

8. Système selon l'une des revendications 1 à 7, **caractérisé par le fait que** les paramètres d'usinage pour différents processus d'usinage sont stockés dans l'unité de mémoire (7) et que des paramètres d'usinage spécifiques sont sélectionnés dans l'unité informatique (8) pour la pièce spécifique (10) pour laquelle le processus de serrage est modélisé.

9. Système selon l'une des revendications 1 à 8, **caractérisé par le fait que** la puissance de coupe et/ou la conduction de la machine et/ou le taux d'enlèvement de métal d'une machine d'usinage traitant la pièce spécifique (10) sont déterminés en tant que données de performance, et/ou **par le fait que** les paramètres de sécurité pour les processus d'usinage de la pièce spécifique (10) sont déterminés en tant que données de performance.

10. Système selon la revendication 9, **caractérisé par le fait que** les paramètres de sécurité caractérisent la sécurité contre la rupture de la pièce par le système de serrage (1) et/ou la sécurité contre la déformation naissante de la pièce spécifique (10) lors de l'exécution d'un processus d'usinage.

11. Système selon l'une des revendications 1 à 10, **caractérisé par le fait que** l'unité informatique (8) génère des schémas de systèmes de serrage en tant que variables de sortie et les affiche à l'aide de l'unité d'affichage (9).

12. Système selon la revendication 11, **caractérisé par le fait que** la conception concerne l'utilisation et le dimensionnement des sabots de perche et/ou des plaques de perche de soutien.

13. Procédé de conception, en fonction de l'application, d'un système de serrage magnétique (1) pour le serrage d'une pièce (10), réalisée par le système selon la revendication 1, comprenant les étapes suivantes :
- Stocker un certain nombre de systèmes de serrage (1) avec ces paramètres de caractérisation dans une unité de mémoire (7).
- Modéliser un processus de serrage d'une pièce spécifique (10) dans une unité informatique (8) pour des systèmes de serrage (1) stockés dans l'unité de serrage.
- Calculer les forces d'adhérence et les forces de déplacement de la pièce (10) dans l'unité informatique (8) en fonction de la modélisation du processus de serrage.
- Déterminer les paramètres d'usinage d'au moins un processus d'usinage à effectuer sur la pièce (10) au moyen de l'unité informatique (8).
- Calculer l'usinabilité de la pièce spécifique en fonction des paramètres d'usinage.
- Déterminer les données de performance des systèmes de serrage (1) en fonction des forces de maintien et des forces de déplacement ainsi que des paramètres d'usinage et de l'usinabilité calculée de la pièce spécifique au moyen de l'unité informatique (8).
- Afficher les systèmes de serrage (1) dans un ordre spécifié par les données de performance sur une unité d'affichage (9).

14. Programme d'ordinateur comprenant des instructions qui, lorsqu'elles sont exécutées par un ordinateur, permettent à ce dernier d'exécuter un procédé selon la revendication 13.

15. Produit de programme d'ordinateur comprenant des moyens de codage de programme stockés sur un support lisible par ordinateur et disposés de telle sorte que lorsque le programme d'ordinateur est exécuté sur l'ordinateur, l'ordinateur exécute toutes les étapes de la revendication 13 après avoir chargé le programme d'ordinateur.
